# FASCICULE DE BREVET EUROPEEN

(11) **EP 4 046 406 B1**
(45) Date de publication et mention de la délivrance du brevet: **12.02.2025**
(21) Numéro de dépôt: 20793029.8
(22) Date de dépôt: 30.09.2020
(51) Int. Cl.: H04W 8/26, H04L 9/40, H04W 12/12, H04W 8/04, H04W 8/18

(54) **PROCÉDÉ D'ACTIVATION D'UN PROFIL OPÉRATIONNEL INSTALLÉ DANS UN ÉQUIPEMENT UTILISATEUR ACCESSIBLE PAR UN RÉSEAU DE RADIOCOMMUNICATIONS, PRODUIT PROGRAMME D'ORDINATEUR ET DISPOSITIFS CORRESPONDANTS**
VERFAHREN ZUR AKTIVIERUNG EINES IN EINEM BENUTZERGERÄT INSTALLIERTEN BETRIEBSPROFILS MIT ZUGANG ZU EINEM FUNKKOMMUNIKATIONSNETZ, COMPUTERPROGRAMMPRODUKT UND ENTSPRECHENDE VORRICHTUNGEN
METHOD FOR ACTIVATING AN OPERATIONAL PROFILE INSTALLED IN A USER DEVICE WHICH IS ACCESSIBLE TO A RADIOCOMMUNICATION NETWORK, COMPUTER PROGRAM PRODUCT, AND CORRESPONDING DEVICES

(30) Priorité: 15.10.2019 FR 1911430
(43) Date de publication de la demande: 24.08.2022
(73) Titulaire: Orange, 92130 Issy-les-Moulineaux (FR)
(72) Inventeur: DADAS, Mohammed, 92326 CHÂTILLON CEDEX (FR); ALLAL, Imed, 92326 CHÂTILLON CEDEX (FR); DIEUDOP KOUAHOU, Hervé, 92326 CHÂTILLON CEDEX (FR); VIEILLEDENT, Laurent, 92326 CHÂTILLON CEDEX (FR)
(74) Mandataire: Vidon Brevets & Stratégie
(86) Numéro de dépôt international: PCT/FR2020/051714
(87) Numéro de publication internationale: WO 2021/074499

(56) Documents cités:
- WO-A1-2018/183332
- US-A1- 2012 258 725

## Description

### Domaine de l'invention

Le domaine de l'invention est celui de la mise en œuvre des réseaux de radiocommunications. L'invention se rapporte plus particulièrement à la gestion des ressources dans de tels réseaux de radiocommunications.

L'invention a de nombreuses applications, notamment, mais non exclusivement, dans le domaine des réseaux de radiocommunications conformes aux normes 3GPP (de l'anglais « 3rd Generation Partnership Project ») de dernières générations ou de générations futures.

### Art antérieur et ses inconvénients

Dans la plupart des cas, un équipement utilisateur (e.g. un smartphone, une tablette ou un ordinateur équipé d'une connexion cellulaire, etc.) destiné à être connecté à un réseau de radiocommunications est équipé d'une carte SIM (pour « Subscriber Identity Module » en anglais). La carte SIM contient les données nécessaires à l'équipement utilisateur pour pouvoir établir une connexion avec le réseau en question. Pour de tels équipements, la carte SIM est traditionnellement une carte physique fournie par l'opérateur lors de la souscription d'un abonnement.

Une telle carte est ainsi par nature amovible de l'équipement utilisateur. Ainsi, lors de la résiliation de l'abonnement correspondant, l'utilisateur de l'équipement retire naturellement la carte SIM, maintenant inutilisable, de l'équipement en question. C'est par exemple le cas afin de mettre une nouvelle carte SIM correspondant à un nouvel abonnement. Alternativement, si l'utilisateur n'a plus l'usage de l'équipement après la résiliation de son abonnement, l'utilisateur éteint souvent l'équipement (ou ce dernier s'éteint naturellement une fois la batterie déchargée). Ainsi, quand bien même l'utilisateur laisserait la carte SIM maintenant inutilisable dans l'équipement utilisateur, l'équipement utilisateur n'enverrait aucune requête sur le réseau de l'opérateur désigné via la carte SIM.

Cependant, de nouveaux équipements utilisateurs, comme par exemple certains objets connectés, sont équipés d'une technologie de carte SIM embarquée (e.g. une eSIM (pour « Embedded Subscriber Identity Module » en anglais) ou une iSIM (pour « Integrated Subscriber Identity Module » en anglais)). Plus particulièrement, un profil opérationnel contenant les données permettant l'accès au réseau est activé dans la carte SIM embarquée. Ainsi, quand bien même l'abonnement est résilié, la carte SIM embarquée contenant le profil opérationnel reste dans l'équipement utilisateur correspondant. Par ailleurs, de tels objets connectés ont une autonomie très importante et sont parfois disposés dans des endroits où ils sont laissés quand bien même leur abonnement à un opérateur a été résilié (e.g. un capteur d'humidité placé en extérieur d'un bâtiment, etc.). De la sorte, de tels objets connectés continuent d'envoyer des requêtes au réseau quand bien même leur abonnement est résilié.

Ainsi, depuis le déploiement de tels objets connectés, une augmentation significative du nombre de réponses avec un code d'erreur (e.g. du type « Client Inconnu » ou « Unknown Subscriber » en anglais) a été observée suite à des requêtes du type : requête en attachement (« Attachment Request » en anglais), requête en authentification (« Send Authentication Information Request » en anglais), ou requête en mise à jour de localisation (« Location Update Request » en anglais).

Les requêtes en question proviennent principalement d'abonnés supprimés mais dont les équipements utilisateurs ont des cartes SIM toujours présentes dans un module actif. Le nombre croissant de tels échanges génère un trafic inutile et une augmentation de la charge réseau. Il existe ainsi un besoin pour réduire la charge du réseau liée aux abonnés supprimés mais dont les équipements utilisateurs ont des cartes SIM toujours présentes dans un module actif. Il existe également un besoin pour que le réseau garde la possibilité de communiquer avec de tels équipements utilisateurs si besoin.

WO 2018/183332 A1 décrit une désactivation d'un profil opérationnel courant et l'activation d'un profil opérationnel passif. US 2012 / 258725 A1 décrit l'envoi par le réseau au préalable des conditions à l'unité de communication du véhicule qui lui interdisent d'envoyer une requête en mise à jour de localisation au réseau.

### Exposé de l'invention

Dans un mode de réalisation de l'invention, il est proposé un procédé d'activation d'un profil opérationnel installé dans un équipement utilisateur accessible par un réseau de radiocommunications. Le profil opérationnel comprend des données permettant à l'équipement utilisateur d'accéder au réseau de radiocommunications lorsque le profil opérationnel est activé dans l'équipement utilisateur. Selon un tel procédé l'équipement utilisateur effectue une étape de désactivation d'un profil opérationnel courant et d'activation d'un profil opérationnel passif. Le profil opérationnel passif :
- interdit à l'équipement utilisateur d'envoyer au réseau de radiocommunications au moins une requête en mise à jour de localisation et/ou au moins une requête en attachement au réseau de radiocommunications ; et
- autorise l'équipement utilisateur à recevoir au moins un message de radiomessagerie comprenant un identifiant unique de l'équipement utilisateur.

Ainsi, l'invention propose une solution nouvelle et inventive pour réduire la charge du réseau de radiocommunication (e.g. un réseau GSM (pour « Global System for Mobile Communications » en anglais), GPRS (pour « General Packet Radio Service » en anglais), EPGRS (pour « Enhanced GPRS » en anglais), etc.) liée à des requêtes émanant d'équipements utilisateurs n'ayant plus d'abonnement auprès de l'opérateur du réseau en question.

Par exemple, un tel équipement utilisateur est un objet connecté équipé d'une eSIM (pour « Embedded Subscriber Identity Module » en anglais) ou d'une iSIM (pour « Integrated Subscriber Identity Module » en anglais). Une fois l'abonnement résilié auprès de l'opérateur, le profil opérationnel courant reste actif sur la eSIM ou la iSIM de l'équipement utilisateur. Un tel profil opérationnel courant induit des envois de requêtes réguliers sur le réseau quand bien même de telles requêtes ne peuvent aboutir, l'abonnement de l'équipement utilisateur étant résilié. L'activation du profil opérationnel passif permet d'interdire certaines requêtes et ainsi la charge du réseau.

Par ailleurs, le profil opérationnel passif autorise l'équipement utilisateur à recevoir les messages de radiomessagerie (parfois appelés messages de télémessagerie, de pagination ou de « paging » en anglais) qui lui sont destinés via l'identifiant unique (e.g. un numéro IMSI (pour « International Mobile Subscriber Identity » en anglais)). De la sorte, le réseau garde la possibilité de communiquer avec l'équipement utilisateur, e.g. afin de mettre à jour le profil opérationnel passif ou autre.

Dans des modes de réalisation, l'équipement utilisateur effectue une réception d'une requête, transmise par le réseau de radiocommunications, en désactivation du profil opérationnel courant. L'étape de désactivation d'un profil opérationnel courant et d'activation d'un profil opérationnel passif est mise en œuvre en réponse à la requête en désactivation.

Ainsi, le réseau a la maitrise de l'activation du profil opérationnel passif.

Dans des modes de réalisation, l'équipement utilisateur effectue :
- un envoi, au réseau de radiocommunications, d'une requête en attachement ; et
- une réception d'un message représentatif d'un échec en connexion de l'équipement utilisateur, le message représentatif d'un échec en connexion étant envoyé par le réseau de radiocommunications en réponse à la requête en attachement.

L'envoi d'une requête en attachement répété un nombre prédéterminé de fois délivre un nombre prédéterminé de messages représentatifs d'un échec en connexion. L'étape de désactivation d'un profil opérationnel courant et d'activation d'un profil opérationnel passif est mise en œuvre en réponse à la réception du nombre prédéterminé de messages représentatifs d'un échec en connexion.

Ainsi, l'équipement utilisateur est autonome pour l'activation du profil opérationnel passif.

Dans des modes de réalisation, l'équipement utilisateur effectue :
- une réception d'une requête, transmise par le réseau de radiocommunications, en désactivation du profil opérationnel courant ;
- un envoi, au réseau de radiocommunications, d'une requête en obtention du profil opérationnel passif. La requête en obtention du profil opérationnel passif est envoyée à réception de la requête en désactivation du profil opérationnel courant ; et
- une réception du profil opérationnel passif envoyé par le réseau de radiocommunications en réponse à la requête en obtention du profil opérationnel passif.

Ainsi, l'équipement utilisateur peut mettre en œuvre l'activation du profil passif quand bien même le profil passif en question n'est pas préalablement installé dans l'équipement utilisateur au moment de recevoir la requête en désactivation.

Dans des modes de réalisation, l'équipement utilisateur effectue une réception du profil opérationnel passif envoyé par le réseau de radiocommunications.

Ainsi, le réseau a la maitrise des paramètres du profil opérationnel passif, permettant ainsi un contrôle fin du comportement de l'équipement utilisateur vis-à-vis du réseau en question.

Dans des modes de réalisation, l'équipement utilisateur effectue une réception d'un message de radiomessagerie, envoyé par le réseau de radiocommunications, comprenant l'identifiant unique de l'équipement utilisateur et un champ de données induisant, par l'équipement utilisateur, une désactivation du profil opérationnel passif et une réactivation du profil opérationnel courant. Ainsi, le réseau a la maitrise de la réactivation du profil opérationnel courant préalablement désactivé au profit du profil opérationnel passif. Par ailleurs, une telle réactivation se fait de manière simple et efficace via l'usage d'un message de radiomessagerie, parfois appelé message de télémessagerie, de pagination ou de « paging » en anglais.

Dans des modes de réalisation, l'équipement utilisateur effectue une suppression du profil opérationnel courant après la désactivation du profil opérationnel courant.

Ainsi, aucunes données liées au précédent abonnement de l'équipement utilisateur ne subsiste au sein de l'équipement utilisateur même si l'opérateur du réseau de radiocommunications n'en fait pas le requête.

Dans des modes de réalisation, l'équipement utilisateur effectue une réception d'une requête en suppression, envoyée par le réseau de radiocommunications, induisant, par l'équipement utilisateur, la suppression du profil opérationnel courant.

Ainsi, l'opérateur du réseau de radiocommunications s'assure qu'aucunes données liées au précédent abonnement de l'équipement utilisateur ne subsiste au sein de l'équipement utilisateur.

Dans des modes de réalisation, le réseau effectue un envoi, à l'équipement utilisateur, d'une requête en désactivation du profil opérationnel courant. La requête en désactivation induit au niveau de l'équipement utilisateur la mise en œuvre de l'étape précitée de désactivation du profil opérationnel courant et d'activation du profil opérationnel passif précité.

Ainsi, le réseau a la maitrise de l'activation du profil opérationnel passif.

Dans des modes de réalisation, le réseau effectue :
- une création du profil opérationnel passif ; et
- un envoi du profil opérationnel passif à l'équipement utilisateur.

Ainsi, le réseau a la maitrise des paramètres du profil opérationnel passif, permettant ainsi un contrôle fin du comportement de l'équipement utilisateur vis-à-vis du réseau en question.

Dans des modes de réalisation, le réseau effectue un envoi, à l'équipement utilisateur, d'un message de radiomessagerie comprenant l'identifiant unique de l'équipement utilisateur et un champ de données induisant, par l'équipement utilisateur, la mise en œuvre de l'étape précitée de désactivation du profil opérationnel passif et une réactivation du profil opérationnel courant. Ainsi, le réseau a la maitrise de la réactivation du profil opérationnel courant préalablement désactivé au profit du profil opérationnel passif. Par ailleurs, une telle réactivation se fait de manière simple et efficace via l'usage d'un message de radiomessagerie (parfois appelé message de télémessagerie, de pagination ou de « paging » en anglais).

Dans des modes de réalisation, l'étape de désactivation du profil opérationnel passif et de réactivation du profil opérationnel courant comprend la redéfinition d'un profil opérationnel de réinitialisation depuis le profil opérationnel passif vers le profil opérationnel courant.

Dans des modes de réalisation, l'étape de désactivation du profil opérationnel passif et d'activation du profil opérationnel courant est mise en œuvre suivant un protocole dit de « Fallback Mechanism » selon le standard GSM ESIM M2M (pour « Global System for Mobile communications Association Embedded Subscriber Identity Module for Machine to Machine » en anglais).

Dans des modes de réalisation, le réseau effectue l'envoi, à l'équipement utilisateur, de la requête en suppression induisant, par l'équipement utilisateur, la mise en œuvre de l'étape de suppression du profil opérationnel courant.

Ainsi, l'opérateur du réseau de radiocommunications s'assure qu'aucune donnée liée au précédent abonnement de l'équipement utilisateur ne subsiste au sein de l'équipement utilisateur.

Dans des modes de réalisation, le profil opérationnel passif :
- impose à l'équipement utilisateur de rejeter toute requête envoyée par le réseau de radiocommunications via un message autre que ledit au moins un message de radiomessagerie comprenant l'identifiant unique de l'équipement utilisateur ; et/ou
- interdit à l'équipement utilisateur de requérir un détachement du réseau de radiocommunications.

Ainsi, l'activation du profil opérationnel passif permet de minimiser encore plus la charge du réseau via l'absence de réponse aux requêtes du réseau. Par ailleurs, l'interdiction d'effectuer un détachement du réseau permet de garantir que le réseau gardera le moyen de communiquer avec l'équipement utilisateur via la connaissance de l'identifiant unique de l'équipement utilisateur (e.g. le numéro IMSI de l'équipement utilisateur). En effet, un tel détachement implique un oubli par le réseau de radiocommunications, via e.g. un effacement de mémoire, de l'identifiant unique de l'équipement utilisateur.

Dans des modes de réalisation, l'étape de désactivation du profil opérationnel courant et d'activation du profil opérationnel passif comprend la redéfinition d'un profil opérationnel de réinitialisation depuis le profil opérationnel courant vers le profil opérationnel passif.

Dans des modes de réalisation, l'étape de désactivation du profil opérationnel courant et d'activation du profil opérationnel passif est mise en œuvre suivant le protocole dit de « Fallback Mechanism » selon le standard GSM ESIM M2M.

L'invention concerne également un programme d'ordinateur comprenant des instructions de code de programme pour la mise en œuvre du procédé d'activation décrit ci-dessus (selon l'un quelconque des différents modes de réalisation précités), lorsqu'il est exécuté sur un ordinateur. Dans un autre mode de réalisation de l'invention, il est proposé un dispositif comprenant une machine de calcul reprogrammable ou une machine de calcul dédiée, configurée pour mettre en œuvre les étapes du procédé d'activation selon l'invention telles que mises en œuvre par l'équipement utilisateur (selon l'un quelconque des modes de réalisation précités).

Dans un autre mode de réalisation de l'invention, il est proposé un dispositif comprenant une machine de calcul reprogrammable ou une machine de calcul dédiée, configurée pour mettre en œuvre les étapes du procédé d'activation selon l'invention telles que mises en œuvre par le réseau de radiocommunications (selon l'un quelconque des modes de réalisation précités).

Ainsi, les caractéristiques et avantages de ces dispositifs sont les mêmes que ceux du procédé d'activation décrit précédemment. Par conséquent, ils ne sont pas détaillés plus amplement.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig. 1****]** représente un équipement utilisateur situé dans la portée d'une station de base d'un réseau de radiocommunication selon un mode de réalisation de l'invention ;
**[****Fig. 2a****]** représente les étapes du procédé d'activation d'un profil opérationnel installé dans l'équipement utilisateur de la Fig. 1 selon un mode de réalisation de l'invention ;
**[****Fig. 2b****], [****Fig. 2c] et [Fig. 2d****]** représentent certaines étapes du procédé d'activation d'un profil opérationnel installé dans l'équipement utilisateur de la Fig. 1 selon d'autres modes de réalisation de l'invention ;
**[****Fig. 3****]** représente un exemple de structure de dispositif permettant la mise en œuvre de certaines étapes du procédé d'activation d'un profil opérationnel selon un mode de réalisation de l'invention ;
**[****Fig. 4****]** représente un exemple de structure de dispositif permettant la mise en œuvre d'autres étapes du procédé d'activation d'un profil opérationnel selon un mode de réalisation de l'invention.

### Description détaillée de modes de réalisation de l'invention

Le principe général de l'invention repose sur la désactivation d'un profil opérationnel courant et l'activation d'un profil opérationnel passif dans un équipement utilisateur accessible par un réseau de radiocommunications. Un tel profil opérationnel comprend des données permettant à l'équipement utilisateur d'accéder au réseau de radiocommunications lorsque le profil opérationnel en question est activé dans l'équipement utilisateur. Par exemple, un tel profil opérationnel suit la structure définie dans l'annexe C, « *Example of Profile Package* », section 11.1, *« Example of Profile Package structure »,* du document de norme de la SIM Alliance : *« eUICC Profile Package : Interoperable Format Technical Specification Version 2.1* » du 24 février 2017. Plus particulièrement, le profil opérationnel passif :
- interdit à l'équipement utilisateur d'envoyer au réseau de radiocommunications une (ou plusieurs) requête en mise à jour de localisation et/ou une (ou plusieurs) requête en attachement au réseau de radiocommunications ; et
- autorise l'équipement utilisateur à recevoir un (ou plusieurs) message de radiomessagerie (parfois appelés messages de télémessagerie, de pagination ou de « paging » en anglais) comprenant un identifiant unique de l'équipement utilisateur (e.g. un numéro IMSI (pour « International Mobile Subscriber Identity » en anglais).

Ainsi, l'activation du profil opérationnel passif permet d'interdire certaines requêtes et ainsi alléger la charge du réseau. Par ailleurs, le profil opérationnel passif autorise l'équipement utilisateur à recevoir les messages de radiomessagerie qui lui sont destinés via l'identifiant unique. De la sorte, le réseau garde la possibilité de communiquer avec l'équipement utilisateur, e.g. afin de mettre à jour le profil opérationnel passif ou autre. Par exemple, un tel comportement de l'équipement utilisateur est obtenu via la modification du champ « PE-GSM-ACCESS » du profil opérationnel passif lorsque le profil opérationnel passif suit la structure définie dans le document de norme précité de la SIM Alliance.

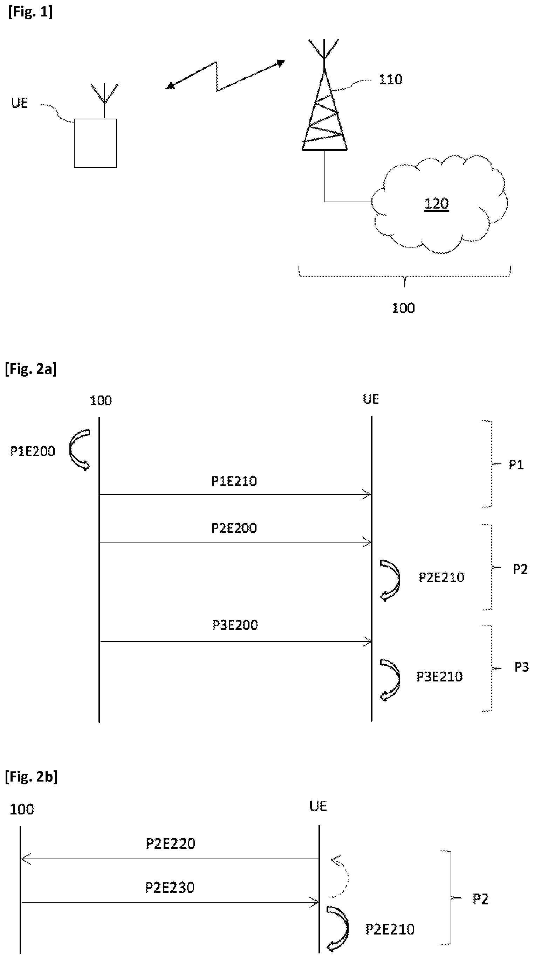

On présente désormais, en relation avec la **Fig. 1** un équipement utilisateur UE situé dans la portée d'une station de base 110 d'un réseau 100 de radiocommunication selon un mode de réalisation de l'invention.

Plus particulièrement, le réseau 100 de radiocommunication est un réseau GSM selon l'une de ses évolutions permettant le transfert de données (e.g. une évolution GPRS, EPGRS, etc.). Dans d'autres modes de réalisation, le réseau 100 de radiocommunication suit un autre standard cellulaire permettant le transfert de données, e.g. un réseau selon la norme 3G, 4G, etc. telle que définie par le 3GPP. Dans d'autres modes de réalisation, le réseau 100 de radiocommunication est un réseau bas débit dédié au objets connectés du type LoRa^{®}, SigFox^{®}, etc.

De retour à la Fig. 1, le réseau 100 de radiocommunication comprend un cœur de réseau 120 et une station de base 110 à laquelle est connecté l'équipement utilisateur UE. Le cœur de réseau 120 implémente différents modules fonctionnels, e.g. au sein d'un ou plusieurs nœuds de réseau, du type MME (pour « Mobility Management Entity » en anglais), MSC (pour « Mobile Switching Center » en anglais), MSC (pour « Serving GPRS Support Node » en anglais), HLR (pour « Home Location Register » en anglais), etc.

L'équipement utilisateur UE est un objet connecté équipé d'une carte SIM émulée, e.g. une eSIM. Dans d'autres modes de réalisation, l'équipement utilisateur est équipé d'une carte SIM intégrée, e.g. une iSIM. Dans d'autres modes de réalisation, l'équipement utilisateur est un terminal comprenant des moyens de communication radio permettant de se connecter à un réseau de radiocommunication, e.g. un smartphone, une tablette ou un ordinateur équipé d'une connexion cellulaire, etc.

De retour à la Fig. 1, un profil opérationnel courant est présent dans la carte SIM émulée. Comme discuté ci-dessus, un tel profil opérationnel comprend des données permettant à l'équipement utilisateur UE d'accéder au réseau 100 de radiocommunications lorsque le profil opérationnel en question est activé dans l'équipement utilisateur UE. Notamment, le profil opérationnel courant comprend un identifiant unique de l'équipement utilisateur UE, i.e. un identifiant qui est différent pour chaque équipement utilisateur UE connecté au réseau 100. Un tel identifiant unique (e.g. un numéro IMSI) permet au réseau 100 d'envoyer des messages destinés uniquement à l'équipement utilisateur UE ainsi que d'identifier l'origine de messages envoyées par différents équipements utilisateurs UE.

L'abonnement de l'équipement utilisateur UE a été résilié auprès de l'opérateur du réseau 100. Cependant, le profil opérationnel courant est toujours activé dans l'équipement utilisateur UE. De la sorte, l'équipement utilisateur UE, tant que ses ressources en énergie lui permettent de le faire, continue d'envoyer au réseau 100 des requêtes du type : requête en attachement (« Attachment Request » en anglais), requête en authentification (« Send Authentication Information Request » en anglais), requête en mise à jour de localisation (« Location Update Request » en anglais), etc. Ceci engendre une charge inutile du réseau 110.

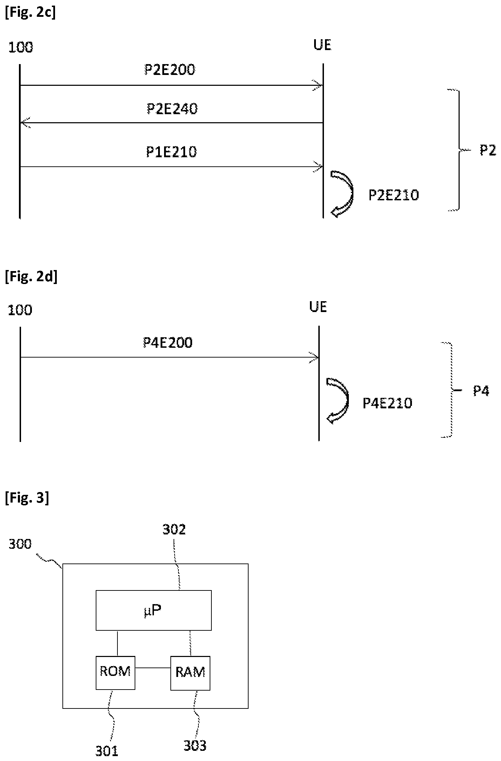

Cependant, l'équipement utilisateur UE et le réseau 100 sont configurés pour implémenter le procédé d'activation d'un profil opérationnel tel que décrit ci-dessous en relation avec les Fig. 2a, Fig. 2b et Fig. 2c. De la sorte, la charge du réseau 100 reste maitrisée.

On présente désormais, en relation avec la **Fig. 2a** les étapes d'un procédé d'activation d'un profil opérationnel installé dans l'équipement utilisateur UE de la Fig. 1 selon un mode de réalisation de l'invention.

### Phase P1 : Obtention du profil opérationnel passif

Lors d'une **étape P1E200,** le réseau 100 créé un profil opérationnel passif. Lorsqu'il est activé dans l'équipement utilisateur UE, un tel profil opérationnel passif :
- interdit à l'équipement utilisateur UE d'envoyer au réseau 100 une (ou plusieurs) requête en mise à jour de localisation (« Location Update Request » en anglais) et/ou une (ou plusieurs) requête en attachement au réseau 100 (« Attachment Request » en anglais) ; et
- autorise l'équipement utilisateur UE à recevoir un (ou plusieurs) message de radiomessagerie comprenant un identifiant unique de l'équipement utilisateur (e.g. un numéro IMSI).

Ainsi, l'activation d'un tel profil opérationnel passif au niveau de l'équipement utilisateur UE permet d'interdire certaines requêtes et ainsi réduire la charge du réseau 100. Toutefois, le réseau 100 garde la possibilité de communiquer avec l'équipement utilisateur UE. En ce sens, l'équipement utilisateur UE adopte un comportement passif du point de vue du réseau 100.

Dans certains modes de réalisation, le profil opérationnel passif :
- impose également à l'équipement utilisateur UE de rejeter toute requête envoyée par le réseau 100 via un message autre que le (ou les) message de radiomessagerie comprenant l'identifiant unique de l'équipement utilisateur UE ; et/ou
- interdit également à l'équipement utilisateur UE de requérir un détachement du réseau 100, un tel détachement impliquant un oubli par le réseau 100 (via e.g. un effacement de mémoire) de l'identifiant unique de l'équipement utilisateur UE.

Ainsi, l'activation du profil opérationnel passif selon ces modes de réalisation permet de minimiser encore plus la charge du réseau 100 via l'absence de réponse aux requêtes du réseau 100. Par ailleurs, l'interdiction d'effectuer un détachement du réseau 100 permet de garantir que le réseau 100 gardera le moyen de communiquer avec l'équipement utilisateur UE via la connaissance de l'identifiant unique de l'équipement utilisateur UE (e.g. le numéro IMSI de l'équipement utilisateur UE).

De retour à la Fig. 2a, lors d'une **étape P1E210,** le réseau 100 envoie (e.g. via un message selon le protocole OTA (pour « Over The Air » en anglais) tel que défini dans le document de norme du consortium GSMA : *« Remote Provisioning Architecture for Embedded UICC Technical Specification V4.0* » de février 2019) le profil opérationnel passif à l'équipement utilisateur UE (e.g. via un module fonctionnel OSM (pour « On-Demand Subscription Manager » en anglais) du réseau 100). L'équipement utilisateur UE obtient ainsi le profil opérationnel passif via une réception du profil opérationnel passif envoyé par le réseau 100.

Dans d'autres modes de réalisation, L'équipement utilisateur UE ne reçoit pas le profil opérationnel passif envoyé par le réseau 100. Le profil opérationnel passif est par exemple préinstallé par défaut dans la carte embarquée de l'équipement utilisateur UE.

### Phase P2 : Activation du profil opérationnel passif

De retour à la Fig. 2a, lors d'une **étape P2E200,** l'équipement utilisateur UE reçoit une requête, transmise par le réseau 100, en désactivation du profil opérationnel courant.

Lors d'une **étape P2E210,** l'équipement utilisateur UE effectue une étape de désactivation du profil opérationnel courant et d'activation du profil opérationnel passif.

Selon ce mode de réalisation, la mise en œuvre de l'étape P2E210 par l'équipement utilisateur UE est induite par la réception de la requête en désactivation du profil opérationnel courant. Dans d'autres modes de réalisation décrits ci-dessous notamment en relation avec les Fig. 2b et Fig. 2c, la mise en œuvre de l'étape P2E210 par l'équipement utilisateur UE est induite par d'autres conditions.

Dans certains modes de réalisation, l'étape P2E210 de désactivation du profil opérationnel courant et d'activation du profil opérationnel passif comprend la redéfinition d'un profil opérationnel de réinitialisation depuis le profil opérationnel courant vers le profil opérationnel passif. En d'autres termes, le profil opérationnel passif devient le profil opérationnel par défaut, e.g. le profil opérationnel qui est activé par défaut lors d'une réinitialisation (ou remise à zéro) de l'équipement utilisateur UE. Par exemple, une telle étape P2E210 de désactivation du profil opérationnel courant et d'activation du profil opérationnel passif est mise en œuvre suivant un protocole dit de « Fallback Mechanism » selon le standard GSM ESIM M2M (pour « Global System for Mobile communications Association Embedded Subscriber Identity Module for Machine to Machine » en anglais).

### Phase P3 : Suppression du profil opérationnel courant désactivé

De retour à la Fig. 2a, lors d'une **étape P3E200,** le réseau 100 effectue un envoi, à l'équipement utilisateur UE, d'une requête en suppression (e.g. via un message selon le protocole OTA) induisant la mise en œuvre d'une **étape P3E210** par l'équipement utilisateur UE. Lors de l'étape P3E210 l'équipement utilisateur UE supprime le profil opérationnel courant à réception de la requête en suppression. Ainsi, l'opérateur du réseau de radiocommunications s'assure qu'aucune donnée liée au précédent abonnement de l'équipement utilisateur ne subsiste au sein de l'équipement utilisateur.

Dans certains modes de réalisation, l'étape P3E200 n'est pas mise en œuvre et l'équipement utilisateur UE effectue l'étape P3E210 de suppression du profil opérationnel courant après la mise en œuvre de l'étape P2E210 de désactivation du profil opérationnel courant. Dans ce cas, l'équipement utilisateur UE effectue l'étape P3E210 sans attendre de requête particulière en ce sens de la part du réseau 100. Ainsi, aucunes données liées au précédent abonnement de l'équipement utilisateur ne subsiste au sein de l'équipement utilisateur même si l'opérateur du réseau de radiocommunications n'en fait pas le requête.

Dans d'autres modes de réalisation, la phase P3 telle que décrite ci-dessus (selon l'un quelconque des modes de réalisation précités) n'est pas mise en œuvre et le profil opérationnel courant n'est pas supprimé après avoir été désactivé. C'est par exemple le cas lorsqu'une phase P4 telle que décrite ci-dessous en lien avec la Fig. 2d est mise en œuvre.

On présente désormais, en relation avec la **Fig. 2b** certaines étapes du procédé d'activation d'un profil opérationnel installé dans l'équipement utilisateur de la Fig. 1 selon un autre mode de réalisation de l'invention. Plus particulièrement, le mode de réalisation de la Fig. 2b concerne les étapes de la phase P2 d'activation du profil opérationnel passif.

Selon ce mode de réalisation, lors d'une **étape P2E220,** l'équipement utilisateur UE envoie au réseau 100 une requête en attachement (« Attachment Request » en anglais). Or, comme discuté ci-dessus en relation avec la Fig. 1, l'équipement utilisateur UE n'est plus abonné auprès du réseau 100. Ainsi, lors d'une **étape P2E230,** le réseau 100 envoie à l'équipement utilisateur UE un message représentatif d'un échec en connexion de l'équipement utilisateur UE en réponse à la requête en attachement. Suite à la réception du message en question, l'équipement utilisateur UE est à même d'envoyer une nouvelle requête en attachement qui va également induire un échec en connexion et ainsi de suite. Cependant, suite à la réception d'un nombre prédéterminé de messages représentatifs d'un échec en connexion, l'étape P2E210 de désactivation du profil opérationnel courant et d'activation du profil opérationnel passif est mise en œuvre de sorte à limiter la charge du réseau 100. Selon ce mode de réalisation, l'équipement utilisateur est autonome pour l'activation du profil opérationnel passif.

Dans certaines variantes, un tel mode de réalisation de la phase P2 est combinable avec les modes de réalisation de la phase P1 et/ou de la phase P3 décrits ci-dessus en relation avec la Fig. 2a. Dans d'autres variantes, un tel mode de réalisation de la phase P2 est combinable avec les modes de réalisation de la phase P1 décrits ci-dessus en relation avec la Fig. 2a et/ou de la phase P4 décrits ci-dessous en relation avec la Fig. 2d.

On présente désormais, en relation avec la **Fig. 2c** certaines étapes du procédé d'activation d'un profil opérationnel installé dans l'équipement utilisateur de la Fig. 1 selon un autre mode de réalisation de l'invention. Plus particulièrement, le mode de réalisation de la Fig. 2c concerne les étapes de la phase P2 d'activation du profil opérationnel passif.

Selon ce mode de réalisation également, la phase P2 comprend l'étape P2E200 pendant laquelle l'équipement utilisateur UE reçoit une requête, transmise par le réseau 100, en désactivation du profil opérationnel courant.

Cependant, dans le mode de réalisation de la Fig. 2c, l'équipement utilisateur UE reçoit une telle requête alors qu'aucun profil opérationnel passif n'est installé dans l'équipement utilisateur UE. Cette situation résulte par exemple du fait que l'étape P1E210 mise en œuvre préalablement lors d'une phase P1 (selon l'un quelconque des modes de réalisation précités) n'a pas abouti, par exemple parce que les données reçues par l'équipement utilisateur UE sont de trop mauvaise qualité du fait des conditions de propagation radioélectrique.

De la sorte, lors d'une **étape P2E240,** l'équipement utilisateur UE envoie au réseau 100 une requête en obtention du profil opérationnel passif. En réponse à la requête en question, le réseau met en œuvre l'étape P1E210 d'envoi du profil opérationnel passif à l'équipement utilisateur UE. L'équipement utilisateur UE obtient ainsi le profil opérationnel passif via une réception du profil opérationnel passif envoyé par le réseau 100. L'équipement utilisateur UE met en œuvre l'étape P2E210 de désactivation du profil opérationnel courant et d'activation du profil opérationnel passif (selon l'un quelconque des modes de réalisation précités).

Dans certaines variantes, un tel mode de réalisation de la phase P2 est combinable avec les modes de réalisation de la phase P1 et/ou de la phase P3 décrits ci-dessus en relation avec la Fig. 2a. Dans d'autres variantes, un tel mode de réalisation de la phase P2 est combinable avec les modes de réalisation de la phase P1 décrits ci-dessus en relation avec la Fig. 2a et/ou de la phase P4 décrits ci-dessous en relation avec la Fig. 2d.

On présente désormais, en relation avec la **Fig. 2d** certaines étapes du procédé d'activation d'un profil opérationnel installé dans l'équipement utilisateur de la Fig. 1 selon un autre mode de réalisation de l'invention.

### Phase P4 : Réactivation du profil opérationnel courant désactivé

Ce mode de réalisation s'applique dans le cas où la phase P3 (selon l'un quelconque des modes de réalisation précités) décrite ci-dessus en relation avec la Fig. 2a n'est pas mise en œuvre. En d'autres termes, la phase P4 s'applique le cas échéant lorsque le profil opérationnel courant n'est pas supprimé de l'équipement utilisateur UE une fois désactivé.

Ainsi, lors d'une **étape P4E200,** le réseau 100 effectue un envoi, à l'équipement utilisateur UE, d'un message de radiomessagerie comprenant l'identifiant unique de l'équipement utilisateur UE. Le message de radiomessagerie comprend en outre un champ de données induisant la mise en œuvre d'une **étape P4E210** par l'équipement utilisateur UE. Plus particulièrement, lors de l'étape P4E210 l'équipement utilisateur UE désactive le profil opérationnel passif et réactive le profil opérationnel courant. Selon ce mode de réalisation, la mise en œuvre de l'étape P4E210 par l'équipement utilisateur UE est induite par la réception de la requête en désactivation du profil opérationnel passif. Ainsi, le réseau a la maitrise de la réactivation du profil opérationnel courant préalablement désactivé au profit du profil opérationnel passif.

Dans certains modes de réalisation, l'étape P4E210 de désactivation du profil opérationnel passif et de réactivation du profil opérationnel courant comprend la redéfinition du profil opérationnel de réinitialisation depuis le profil opérationnel passif vers le profil opérationnel courant. En d'autres termes, le profil opérationnel courant redevient le profil opérationnel par défaut, e.g. le profil opérationnel qui est activé par défaut lors d'une réinitialisation (ou remise à zéro) de l'équipement utilisateur UE. Par exemple, une telle étape P4E210 de désactivation du profil opérationnel courant et d'activation du profil opérationnel passif est mise en œuvre suivant un protocole dit de « Fallback Mechanism » selon le standard GSM ESIM M2M (pour « Global System for Mobile communications Association Embedded Subscriber Identity Module for Machine to Machine » en anglais).

De tels modes de réalisation de la phase P4 sont combinables avec les modes de réalisation des phases P1 et P2 décrits ci-dessus en relation avec les figs. 2a, 2b et 2c.

On présente désormais, en relation avec la **Fig. 3** un exemple de structure de dispositif 300 permettant de mettre en œuvre certaines étapes du procédé d'activation d'un profil opérationnel des figs. 2a à 2d selon un mode de réalisation de l'invention. Plus particulièrement, le dispositif 300 permet de mettre en œuvre tout ou partie des étapes du procédé d'activation d'un profil opérationnel telles que mises en œuvre au sein de l'équipement utilisateur UE.

Le dispositif 300 comprend une mémoire vive 303 (par exemple une mémoire RAM), une unité de traitement 302 équipée par exemple d'un processeur, et pilotée par un programme d'ordinateur stocké dans une mémoire morte 301 (par exemple une mémoire ROM ou un disque dur). A l'initialisation, les instructions de code du programme d'ordinateur sont par exemple chargées dans la mémoire vive 303 avant d'être exécutées par le processeur de l'unité de traitement 302. Cette Fig. 3 illustre seulement une manière particulière, parmi plusieurs possibles, de réaliser le dispositif 300 afin qu'il effectue certaines étapes du procédé d'activation d'un profil opérationnel selon l'invention (selon l'un quelconque des modes de réalisation et/ou variantes décrit(e)s ci-dessus en relation avec la figs. 2a à 2d). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 300 est réalisé avec une machine de calcul reprogrammable, le programme correspondant (c'est-à-dire la séquence d'instructions) pourra être stocké dans un médium de stockage amovible (tel que par exemple un CD-ROM, un DVD-ROM, une clé USB) ou non, ce médium de stockage étant lisible partiellement ou totalement par un ordinateur ou un processeur.

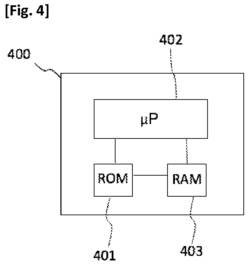

Dans certains modes de réalisation, le dispositif 300 est inclus dans l'équipement utilisateur UE. On présente désormais, en relation avec la **Fig. 4** un exemple de structure de dispositif 400 permettant de mettre en œuvre certaines étapes du procédé d'activation d'un profil opérationnel des figs. 2a à 2d selon un mode de réalisation de l'invention. Plus particulièrement, le dispositif 400 permet de mettre en œuvre tout ou partie des étapes du procédé d'activation d'un profil opérationnel telles que mises en œuvre au sein du réseau 100.

Le dispositif 400 comprend une mémoire vive 403 (par exemple une mémoire RAM), une unité de traitement 402 équipée par exemple d'un processeur, et pilotée par un programme d'ordinateur stocké dans une mémoire morte 401 (par exemple une mémoire ROM ou un disque dur). A l'initialisation, les instructions de code du programme d'ordinateur sont par exemple chargées dans la mémoire vive 403 avant d'être exécutées par le processeur de l'unité de traitement 402. Cette Fig. 4 illustre seulement une manière particulière, parmi plusieurs possibles, de réaliser le dispositif 400 afin qu'il effectue certaines étapes du procédé d'activation d'un profil opérationnel selon l'invention (selon l'un quelconque des modes de réalisation et/ou variantes décrit(e)s ci-dessus en relation avec la figs. 2a à 2d). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 400 est réalisé avec une machine de calcul reprogrammable, le programme correspondant (c'est-à-dire la séquence d'instructions) pourra être stocké dans un médium de stockage amovible (tel que par exemple un CD-ROM, un DVD-ROM, une clé USB) ou non, ce médium de stockage étant lisible partiellement ou totalement par un ordinateur ou un processeur.

Dans certains modes de réalisation, le dispositif 400 est inclus dans un dispositif du réseau 100, e.g. dans un nœud du réseau 100.

## Revendications

1. Procédé d'activation d'un profil opérationnel installé dans un équipement utilisateur (UE) accessible par un réseau (100) de radiocommunications, ledit profil opérationnel comprenant des données permettant audit équipement utilisateur d'accéder audit réseau de radiocommunications lorsque ledit profil opérationnel est activé dans ledit équipement utilisateur,
**caractérisé en ce que** ledit équipement utilisateur effectue une étape (P2E210) de désactivation d'un profil opérationnel courant et d'activation d'un profil opérationnel passif, ledit profil opérationnel passif :
- interdisant audit équipement utilisateur d'envoyer audit réseau de radiocommunications au moins une requête en mise à jour de localisation et/ou au moins une requête en attachement audit réseau de radiocommunications .

2. Procédé selon la revendication 1 dans lequel ledit équipement utilisateur effectue une réception (P2E200) d'une requête, transmise par ledit réseau de radiocommunications, en désactivation dudit profil opérationnel courant,
ladite étape (P2E210) de désactivation d'un profil opérationnel courant et d'activation d'un profil opérationnel passif étant mise en œuvre en réponse à ladite requête en désactivation.

3. Procédé selon la revendication 1 dans lequel ledit équipement utilisateur effectue :
- un envoi (P2E220), audit réseau de radiocommunications, d'une requête en attachement ; et
- une réception (P2E230) d'un message représentatif d'un échec en connexion dudit équipement utilisateur, ledit message représentatif d'un échec en connexion étant envoyé par ledit réseau de radiocommunications en réponse à ladite requête en attachement,
ledit envoi d'une requête en attachement répété un nombre prédéterminé de fois délivrant un nombre prédéterminé de messages représentatifs d'un échec en connexion,
ladite étape (P2E210) de désactivation d'un profil opérationnel courant et d'activation d'un profil opérationnel passif étant mise en œuvre en réponse à la réception dudit nombre prédéterminé de messages représentatifs d'un échec en connexion.

4. Procédé selon la revendication 1 dans lequel ledit équipement utilisateur effectue :
- une réception (P2E200) d'une requête, transmise par ledit réseau de radiocommunications, en désactivation dudit profil opérationnel courant ;
- un envoi (P2E240), audit réseau de radiocommunications, d'une requête en obtention dudit profil opérationnel passif, ladite requête en obtention dudit profil opérationnel passif étant envoyée à réception de ladite requête en désactivation dudit profil opérationnel courant; et
- une réception (P1E210) dudit profil opérationnel passif envoyé par ledit réseau de radiocommunications en réponse à ladite requête en obtention dudit profil opérationnel passif.

5. Procédé selon l'une quelconque des revendications 1 à 3 dans lequel ledit équipement utilisateur effectue une réception (P1E210) dudit profil opérationnel passif envoyé par ledit réseau de radiocommunications.

6. Procédé selon l'une quelconque des revendications 1 à 5 dans lequel ledit équipement utilisateur effectue une réception (P4E200) d'un message de radiomessagerie, envoyé par ledit réseau de radiocommunications, comprenant un identifiant unique dudit équipement utilisateur et un champ de données induisant, par ledit équipement utilisateur, une désactivation (P4E210) dudit profil opérationnel passif et une réactivation dudit profil opérationnel courant.

7. Procédé selon l'une quelconque des revendications 1 à 5 dans lequel ledit équipement utilisateur effectue une suppression (P3E210) dudit profil opérationnel courant après ladite désactivation dudit profil opérationnel courant.

8. Procédé selon la revendication 7 dans lequel ledit équipement utilisateur effectue une réception (P3E200) d'une requête en suppression, envoyée par ledit réseau de radiocommunications, induisant, par ledit équipement utilisateur, ladite suppression (P3E210) dudit profil opérationnel courant.

9. Procédé d'activation d'un profil opérationnel installé dans un équipement utilisateur (UE) accessible par un réseau (100) de radiocommunications, ledit profil opérationnel comprenant des données permettant audit équipement utilisateur d'accéder audit réseau de radiocommunications lorsque ledit profil opérationnel est activé dans ledit équipement utilisateur,
**caractérisé en ce que** ledit réseau effectue un envoi (P2E200), audit équipement utilisateur, d'une requête en désactivation d'un profil opérationnel courant, ladite requête en désactivation induisant au niveau dudit équipement utilisateur la mise en œuvre d'une étape (P2E210) de désactivation dudit profil opérationnel courant et d'activation d'un profil opérationnel passif, ledit profil opérationnel passif :
- interdisant audit équipement utilisateur d'envoyer audit réseau de radiocommunications au moins une requête en mise à jour de localisation et/ou au moins une requête en attachement audit réseau de radiocommunications .

10. Procédé selon la revendication 9 dans lequel ledit réseau effectue :
- une création (P1E200) dudit profil opérationnel passif ; et
- un envoi (P1E210) dudit profil opérationnel passif audit équipement utilisateur.

11. Procédé selon la revendication 9 ou 10 dans lequel ledit réseau effectue un envoi (P4E200), audit équipement utilisateur, d'un message de radiomessagerie comprenant un identifiant unique dudit équipement utilisateur et un champ de données induisant, par ledit équipement utilisateur, la mise en œuvre d'une étape (P4E210) de désactivation dudit profil opérationnel passif et de réactivation dudit profil opérationnel courant.

12. Procédé selon l'une quelconque des revendications 1 à 11 dans lequel ledit profil opérationnel passif :
- autorise ledit équipement utilisateur à recevoir au moins un message de radiomessagerie comprenant un identifiant unique dudit équipement utilisateur ;
- impose audit équipement utilisateur de rejeter toute requête envoyée par ledit réseau de radiocommunications via un message autre que ledit au moins un message de radiomessagerie comprenant ledit identifiant unique dudit équipement utilisateur ; et/ou
- interdit audit équipement utilisateur de requérir un détachement dudit réseau de radiocommunications.

13. Produit programme d'ordinateur comprenant des instructions de code de programme pour la mise en œuvre du procédé selon l'une quelconque des revendications 1 à 8 et 12, lorsque ledit programme est exécuté sur un équipement utilisateur.

14. Dispositif (300) d'activation d'un profil opérationnel installé dans un équipement utilisateur (UE) accessible par un réseau (100) de radiocommunications, ledit profil opérationnel comprenant des données permettant audit équipement utilisateur d'accéder audit réseau de radiocommunications lorsque ledit profil opérationnel est activé dans ledit équipement utilisateur, **caractérisé en ce qu'**il comprend une machine de calcul reprogrammable (302) ou une machine de calcul dédiée, configurée pour effectuer une étape de désactivation d'un profil opérationnel courant et d'activation d'un profil opérationnel passif, ledit profil opérationnel passif :
- interdisant audit équipement utilisateur d'envoyer audit réseau de radiocommunications au moins une requête en mise à jour de localisation et/ou au moins une requête en attachement audit réseau de radiocommunications .

15. Dispositif (400) d'activation d'un profil opérationnel installé dans un équipement utilisateur (UE) accessible par un réseau (100) de radiocommunications, ledit profil opérationnel comprenant des données permettant audit équipement utilisateur d'accéder audit réseau de radiocommunications lorsque ledit profil opérationnel est activé dans ledit équipement utilisateur, **caractérisé en ce qu'**il comprend une machine de calcul reprogrammable (402) ou une machine de calcul dédiée, configurée pour effectuer un envoi, audit équipement utilisateur, d'une requête en désactivation d'un profil opérationnel courant, ladite requête en désactivation induisant au niveau dudit équipement utilisateur la mise en œuvre d'une étape de désactivation dudit profil opérationnel courant et d'activation d'un profil opérationnel passif, ledit profil opérationnel passif :
- interdisant audit équipement utilisateur d'envoyer audit réseau de radiocommunications au moins une requête en mise à jour de localisation et/ou au moins une requête en attachement audit réseau de radiocommunications .

16. Produit programme d'ordinateur comprenant des instructions de code de programme pour la mise en œuvre du procédé selon l'une quelconque des revendications 9 à 11 et 12, lorsque ledit programme est exécuté sur un dispositif de réseau.

## Patentansprüche

1. Verfahren zur Aktivierung eines in ein über ein Funkkommunikationsnetz (100) zugängliches Benutzergerät (UE) installierten Betriebsprofils, wobei das Betriebsprofil Daten enthält, die es dem Benutzergerät ermöglichen, auf das Funkkommunikationsnetz zuzugreifen, wenn das Betriebsprofil im Benutzergerät aktiviert wird, **dadurch gekennzeichnet, dass** das Benutzergerät einen Schritt (P2E210) der Deaktivierung eines aktuellen Betriebsprofils und der Aktivierung eines passiven Betriebsprofils ausführt, wobei das passive Betriebsprofil:
- dem Benutzergerät verbietet, an das Funkkommunikationsnetz mindestens einen Lokalisierungsaktualisierungsantrag und/oder mindestens einen Anbindungsantrag an das Funkkommunikationsnetz zu senden.

2. Verfahren nach Anspruch 1, wobei das Benutzergerät einen Empfang (P2E200) eines vom Funkkommunikationsnetz übertragenen Deaktivierungsantrags des aktuellen Betriebsprofils ausführt,
wobei der Schritt der Deaktivierung (P2E210) eines aktuellen Betriebsprofils und der Aktivierung eines passiven Betriebsprofils als Antwort auf den Deaktivierungsantrag durchgeführt wird.

3. Verfahren nach Anspruch 1, wobei das Benutzergerät ausführt:
- ein Senden (P2E220) eines Anbindungsantrags an das Funkkommunikationsnetz; und
- einen Empfang (P2E230) einer für eine fehlgeschlagene Verbindung des Benutzergeräts repräsentativen Nachricht, wobei die für eine fehlgeschlagene Verbindung repräsentative Nachricht vom Funkkommunikationsnetz als Antwort auf den Anbindungsantrag gesendet wird,
wobei das eine vorbestimmte Anzahl von Malen wiederholte Senden eines Anbindungsantrags eine vorbestimmte Anzahl von für eine fehlgeschlagene Verbindung repräsentativen Nachrichten liefert,
wobei der Schritt (P2E210) der Deaktivierung eines aktuellen Betriebsprofils und der Aktivierung eines passiven Betriebsprofils als Antwort auf den Empfang der vorbestimmten Anzahl von für eine fehlgeschlagene Verbindung repräsentativen Nachrichten durchgeführt wird.

4. Verfahren nach Anspruch 1, wobei das Benutzergerät ausführt:
- einen Empfang (P2E200) eines vom Funkkommunikationsnetz übertragenen Deaktivierungsantrags des aktuellen Betriebsprofils;
- ein Senden (P2E240), an das Funkkommunikationsnetz, eines Antrags zur Beschaffung des passiven Betriebsprofils, wobei der Antrag zur Beschaffung des passiven Betriebsprofils bei Empfang des Deaktivierungsantrags des aktuellen Betriebsprofils gesendet wird; und
- einen Empfang (P1E210) des vom Funkkommunikationsnetz als Antwort auf den Antrag zur Beschaffung des passiven Betriebsprofils gesendeten passiven Betriebsprofils.

5. Verfahren nach einem der Ansprüche 1 bis 3, wobei das Benutzergerät einen Empfang (P1E210) des vom Funkkommunikationsnetz gesendeten passiven Betriebsprofils ausführt.

6. Verfahren nach einem der Ansprüche 1 bis 5, wobei das Benutzergerät einen Empfang (P4E200) einer vom Funkkommunikationsnetz gesendeten Funkrufnachricht ausführt, die eine eindeutige Kennung des Benutzergeräts und ein Datenfeld enthält, das durch das Benutzergerät eine Deaktivierung (P4E210) des passiven Betriebsprofils und eine Reaktivierung des aktuellen Betriebsprofils bewirkt.

7. Verfahren nach einem der Ansprüche 1 bis 5, wobei das Benutzergerät ein Löschen (P3E210) des aktuellen Betriebsprofils nach der Deaktivierung des aktuellen Betriebsprofils ausführt.

8. Verfahren nach Anspruch 7, wobei das Benutzergerät einen Empfang (P3E200) eines vom Funkkommunikationsnetz gesendeten Löschantrags ausführt, der das Löschen (P3E210) des aktuellen Betriebsprofils durch das Benutzergerät bewirkt.

9. Verfahren zur Aktivierung eines in einem über ein Funkkommunikationsnetz (100) zugänglichen Benutzergerät (UE) installierten Betriebsprofils, wobei das Betriebsprofil Daten enthält, die es dem Benutzergerät ermöglichen, auf das Funkkommunikationsnetz zuzugreifen, wenn das Betriebsprofil im Benutzergerät aktiviert wird, **dadurch gekennzeichnet, dass** das Netz ein Senden (P2E200) eines Deaktivierungsantrags eines aktuellen Betriebsprofils an das Benutzergerät ausführt, wobei der Deaktivierungsantrag im Bereich des Benutzergeräts die Durchführung eines Schritts der Deaktivierung (P2E210) des aktuellen Betriebsprofils und der Aktivierung eines passiven Betriebsprofils bewirkt, wobei das passive Betriebsprofil:
- dem Benutzergerät verbietet, mindestens einen Lokalisierungsaktualisierungsantrag und/oder mindestens einen Anbindungsantrag an das Funkkommunikationsnetz an das Funkkommunikationsnetz zu senden.

10. Verfahren nach Anspruch 9, wobei das Netz ausführt:
- eine Erzeugung (P1E200) des passiven Betriebsprofils; und
- ein Senden (P1E210) des passiven Betriebsprofils an das Benutzergerät.

11. Verfahren nach Anspruch 9 oder 10, wobei das Netz ein Senden (P4E200) einer Funkrufnachricht an das Benutzergerät ausführt, die eine eindeutige Kennung des Benutzergeräts und ein Datenfeld enthält, das die Durchführung eines Schritts (P4E210) der Deaktivierung des passiven Betriebsprofils und der Reaktivierung des aktuellen Betriebsprofils durch das Benutzergerät bewirkt.

12. Verfahren nach einem der Ansprüche 1 bis 11, wobei das passive Betriebsprofil:
- das Benutzergerät berechtigt, mindestens eine Funkrufnachricht zu empfangen, die eine eindeutige Kennung des Benutzergeräts enthält;
- dem Benutzergerät vorschreibt, jeden vom Funkkommunikationsnetz über eine andere Nachricht als die mindestens eine Funkrufnachricht, die die eindeutige Kennung des Benutzergeräts enthält, gesendeten Antrag zurückzuweisen; und/oder
- dem Benutzergerät verbietet, ein Trennen vom Funkkommunikationsnetz zu beantragen.

13. Computerprogrammprodukt, das Programmcodeanweisungen für die Durchführung des Verfahrens nach einem der Ansprüche 1 bis 8 und 12 enthält, wenn das Programm auf einem Benutzergerät ausgeführt wird.

14. Vorrichtung (300) zur Aktivierung eines in einem über ein Funkkommunikationsnetz (100) zugänglichen Benutzergerät (UE) installierten Betriebsprofils, wobei das Betriebsprofil Daten enthält, die es dem Benutzergerät ermöglichen, auf das Funkkommunikationsnetz zuzugreifen, wenn das Betriebsprofil im Benutzergerät aktiviert wird, **dadurch gekennzeichnet, dass** sie eine umprogrammierbare Rechenmaschine (302) oder eine dedizierte Rechenmaschine enthält, die konfiguriert ist, einen Schritt der Deaktivierung eines aktuellen Betriebsprofils und der Aktivierung eines passiven Betriebsprofils auszuführen, wobei das passive Betriebsprofil:
- dem Benutzergerät verbietet, mindestens einen Lokalisierungsaktualisierungsantrag und/oder mindestens einen Anbindungsantrag an das Funkkommunikationsnetz an das Funkkommunikationsnetz zu senden.

15. Vorrichtung (400) zur Aktivierung eines in einem über ein Funkkommunikationsnetz (100) zugänglichen Benutzergerät (UE) installierten Betriebsprofils, wobei das Betriebsprofil Daten enthält, die es dem Benutzergerät ermöglichen, auf das Funkkommunikationsnetz zuzugreifen, wenn das Betriebsprofil im Benutzergerät aktiviert wird, **dadurch gekennzeichnet, dass** sie eine umprogrammierbare Rechenmaschine (402) oder eine dedizierte Rechenmaschine enthält, die konfiguriert ist, ein Senden eines Deaktivierungsantrags eines aktuellen Betriebsprofils an das Benutzergerät auszuführen, wobei der Deaktivierungsantrag im Bereich des Benutzergeräts die Durchführung eines Schritts der Deaktivierung des aktuellen Betriebsprofils und der Aktivierung eines passiven Betriebsprofils bewirkt, wobei das passive Betriebsprofil:
- dem Benutzergerät verbietet, mindestens einen Lokalisierungsaktualisierungsantrag und/oder mindestens einen Anbindungsantrag an das Funkkommunikationsnetz an das Funkkommunikationsnetz zu senden.

16. Computerprogrammprodukt, das Programmcodeanweisungen für die Durchführung des Verfahrens nach einem der Ansprüche 9 bis 11 und 12 enthält, wenn das Programm auf einer Netzvorrichtung ausgeführt wird.

## Claims

1. Method for activating an operational profile installed in a user device (UE) which is accessible to a radiocommunication network (100), said operational profile comprising data which allows said user device to access said radiocommunication network when said operational profile is activated in said user device, **characterised in that** said user device carries out a step (P2E210) of deactivating a current operational profile and activating a passive operational profile, said passive operational profile:
- preventing said user device from sending to said radiocommunication network at least one location update request and/or at least one attachment request to said radiocommunication network.

2. Method according to claim 1 wherein said user device receives (P2E200) a request, transmitted by said radiocommunication network, to deactivate said current operational profile,
said step (P2E210) of deactivating a current operational profile and activating a passive operational profile being implemented in response to said deactivation request.

3. Method according to claim 1 wherein said user device:
- sends (P2E220), to said radiocommunication network, an attachment request; and
- receives (P2E230) a message representative of a connection failure from said user device, said message representative of a connection failure being sent by said radiocommunication network in response to said attachment request,
said sending of an attachment request repeated a predetermined number of times delivering a predetermined number of messages representative of a connection failure,
said step (P2E210) of deactivating a current operational profile and activating a passive operational profile being implemented in response to the receipt of said predetermined number of messages representative of a connection failure.

4. Method according to claim 1 wherein said user device:
- receives (P2E200) a request, transmitted by said radiocommunication network, to deactivate said current operational profile;
- sends (P2E240) to said radiocommunication network a request to obtain said passive operational profile, said request to obtain said passive operational profile being sent upon receipt of said request to deactivate said current operational profile; and
- receives (P1E210) said passive operational profile sent by said radiocommunication network in response to said request to obtain said passive operational profile.

5. Method according to any one of claims 1 to 3 wherein said user device receives (P1E210) said passive operational profile sent by said radiocommunication network.

6. Method according to any one of claims 1 to 5 wherein said user device receives (P4E200) a radio-paging message, sent by said radiocommunication network, comprising a unique identifier for said user device and a data field causing, by said user device, a deactivation (P4E210) of said passive operational profile and a reactivation of said current operational profile.

7. Method according to any one of claims 1 to 5 wherein said user device deletes (P3E210) said current operational profile after said deactivation of said current operational profile.

8. Method according to claim 7 wherein said user device receives (P3E200) a deletion request, sent by said radiocommunication network, causing, by said user device, said deletion (P3E210) of said current operational profile.

9. Method for activating an operational profile installed in a user device (UE) which is accessible to a radiocommunication network (100), said operational profile comprising data which allows said user device to access said radiocommunication network when said operational profile is activated in said user device, **characterised in that** said network sends (P2E200), to said user device, a request to deactivate a current operational profile, said deactivation request causing at said user device the implementation of a step (P2E210) of deactivating said current operational profile and activating a passive operational profile, said passive operational profile:
- preventing said user device from sending to said radiocommunication network at least one location update request and/or at least one attachment request to said radiocommunication network.

10. Method according to claim 9 wherein said network:
- creates (P1E200) said passive operational profile; and
- sends (P1E210) said passive operational profile to said user device.

11. Method according to claim 9 or 10 wherein said network sends (P4E200), to said user device, a radio-paging message comprising a unique identifier for said user device and a data field causing, by said user device, the implementation of a step (P4E210) of deactivating said passive operational profile and reactivating said current operational profile.

12. Method according to any one of claims 1 to 11 wherein said passive operational profile:
- allows said user device to receive at least one radio-paging message comprising a unique identifier for said user device;
- requires that said user device rejects any request sent by said radiocommunication network via a message other than said at least one radio-paging message comprising said unique identifier for said user device; and/or
- prevents said user device from requesting a detachment from said radiocommunication network.

13. Computer program product comprising program code instructions for implementing the method according to any one of claims 1 to 8 and 12, when said program is executed on a user device.

14. Device (300) for activating an operational profile installed in a user device (UE) which is accessible to a radiocommunication network (100), said operational profile comprising data which allows said user device to access said radiocommunication network when said operational profile is activated in said user device, **characterised in that** it comprises a reprogrammable computing machine (302) or a dedicated computing machine configured to carry out a step of deactivating a current operational profile and activating a passive operational profile, said passive operational profile:
- preventing said user device from sending to said radiocommunication network at least one location update request and/or at least one attachment request to said radiocommunication network.

15. Device (400) for activating an operational profile installed in a user device (UE) which is accessible to a radiocommunication network (100), said operational profile comprising data which allows said user device to access said radiocommunication network when said operational profile is activated in said user device, **characterised in that** it comprises a reprogrammable computing machine (402) or a dedicated computing machine configured to send, to said user device, a request to deactivate a current operational profile, said deactivation request causing at said user device the implementation of a step of deactivating said current operational profile and activating a passive operational profile, said passive operational profile:
- preventing said user device from sending to said radiocommunication network at least one location update request and/or at least one attachment request to said radiocommunication network.

16. Computer program product comprising program code instructions for implementing the method according to any one of claims 9 to 11 and 12, when said program is executed on a network device.
